# EUROPEAN PATENT SPECIFICATION

(11) **EP 1 279 150 B1**
(45) Date of publication and mention of the grant of the patent: **30.06.2004**
(21) Application number: 00921013.9
(22) Date of filing: 24.04.2000
(51) Int. Cl.: G08B 13/194

(54) **SURVEILLANCE SYSTEM WITH CAMERA**
ÜBERWACHUNGSSYSTEM MIT KAMERA
SYSTEME DE SURVEILLANCE EQUIPE D'UNE CAMERA

(43) Date of publication of application: 29.01.2003
(73) Proprietor: Video Domain Technologies Ltd, 58855 Holon (IL)
(72) Inventor: HELLMAN, Aviad, 45858 Matan (IL); ZIBZINER, Menachem, 73165 Rinatiya (IL)
(74) Representative: van Westenbrugge, Andries
(86) International application number: PCT/IL2000/000239
(87) International publication number: WO 2001/082255

(56) References cited:
- EP-A- 0 967 584
- WO-A-98/56182
- US-A- 5 648 816
- US-A- 6 118 485

## Description

The present invention relates to surveillance systems and in particular to surveillance systems that include cameras.

### BACKGROUND OF THE INVENTION

Many surveillance systems include cameras which periodically or continuously provide images of a surveyed area. Other surveillance systems include cameras which are operated when an intruder is identified. Generally, such cameras record images responsive to signals from one or more detectors, such as infrared detectors or video motion detectors. The detectors are either included in a single casing with the camera or are located separately and transmit their signals through wires to the surveillance system.

U.S. patents 5,448,320 to Sakai et al. and 5,155,474 to Park et al. describe intrusion detection apparatus which includes a film camera operated when an intruder is detected. For many purposes, digital cameras are preferred.

U.S. patent 5,144,661 to Shamosh et al. describes a security protection system comprising sensors which determine when an alarm condition occurs, and a still-digital camera which is activated when an alarm condition occurs. The camera is connected through wires to a memory unit in which images from the camera are stored. The use of wire transmission, however, is limiting, as it requires laying wires within walls or having the wires in sight of an intruder who may tear the wires and thus prevent recording of the images and/or transfer of the images to a monitor where they are viewed by a human.

U.S. patent 4,857,912 to Everett, et al. describes a surveillance robot which includes a plurality of different types of sensors. When an alarm condition is declared, a video camera in the robot is operated and the output from the camera is transmitted to a remote monitor for inspection by a human operator. Wireless transmission of images, however, requires transmission apparatus suitable for very large bandwidths.

U.S. patent 5,982,418 to Ely describes a video surveillance system which includes a plurality of video cameras which are connected through wires to one or more control stations. The cameras are included in a single housing with memory boards that continuously store images from the camera. When an alarm condition is declared, the memory boards retain the images from immediately before the alarm was declared. At a later time the images may be retrieved through the wires to the control station for viewing or permanent storage. This system, however, has the same disadvantages described above relating to wired systems.

A surveillance unit referred to as SWC40 from Silent Witness Inc., described in http:/www.silent-witness.com, has a camera which records images on a digital memory. A DSP within the surveillance unit tracks movements using video movement detection (VMD) and initiates recording of images on the digital memory. The images may be viewed by connecting a monitor through a cable to the surveillance unit or by wireless transmission of the images to a monitor.

Most surveillance systems with digital cameras allow the user to set a plurality of parameters, such as the image quality, the image rate and the trigger type which initiates the storage of images. The parameters of surveillance units which are permanently connected through wires to a control station may be set from the control station. The parameters of some wireless surveillance units, are set through a small keypad on the surveillance unit. However, due to the small size of the keypad, the parameter setting is not very user friendly and/or the number of options which can be set is limited. The parameters in other wireless surveillance units, are set through a monitor which is connected to the surveillance unit through a cable. This method is quite cumbersome as it requires moving a monitor to the surveillance unit each time the unit is to be programmed.

### SUMMARY OF THE INVENTION

An aspect of some embodiments of the present invention relates to a surveillance unit which includes, in a single housing, at least one sensor, a video camera with an electrical signal output and a removable memory card which stores the images captured by the camera. In order to view the images, a supervisor extracts the memory card from the detection unit and places it in a compatible reader connected to a monitor. The use of a removable memory card for storing the images eliminates the need for a wireless transmitter or a wire connection. Thus, the detection unit may be a stand alone unit which may be easily moved between different locations.

It is noted that the term video camera in the present description and in the claims is taken to mean a camera which provides electrical output signals (in accordance with the technical term). Thus, a video camera may provide still images and/or continuous images (which are generally formed of a series of still images). The video camera may provide analog or digital signals in accordance with any image format known in the art.

In an embodiment of the invention, the contents of the memory card are encrypted to prevent viewing by unauthorized people.

An aspect of some embodiments of the present invention relates to setting the parameters of a detection unit by programming the parameters in the removable memory card which is used to store images captured by a camera of the surveillance unit. When it is desired to change one or more of the settings of the surveillance unit, a memory card is inserted into a reader connected to a computer. The settings are stored in the memory card using the computer, optionally using user friendly software as is known in the computer software industry. Thereafter the memory card is returned to the surveillance unit which applies the programmed settings. The memory card inserted to the reader may be removed from the surveillance unit for insertion to the reader or may be a spare memory card which is switched with the memory card currently in the surveillance unit after the settings are stored on it.

In some embodiments, a software running in the surveillance unit accesses areas of the memory card including the settings during the running of the software. Alternatively, the settings are automatically downloaded from the memory card to operational units of the surveillance unit.

In some embodiments of the invention, the setting of the surveillance unit are set in a single session in which a user views the images stored on the memory card. In many cases, the need to set the parameters of the surveillance unit arises from viewing the captured images.

There is therefore provided in accordance with an embodiment of the present invention, a surveillance unit, including a video camera which provides images in the form of electrical signals, control circuitry which determines when to store images captured by the camera, and a slot for operationally receiving a memory card on which the images are stored as determined by the control circuitry.

In some embodiments the surveillance unit includes at least one detector which provides signals to the control circuitry. In some embodiments, the at least one detector includes an infrared detector. In some embodiments, the control circuitry determines when the digital camera should capture images. In some embodiments, the control circuitry performs the determination responsive to video motion detection (VMD) performed on images captured by the camera. In some embodiments, the control circuitry includes a processor which receives the signals from the at least one detector and determines whether to store the captured images. In some embodiments, the memory card includes a storage area for operational data of the surveillance unit. In some embodiments, the operational data is downloaded from the removable memory card to an internal memory of the surveillance unit when the memory card is inserted to the surveillance unit. In some embodiments, the operational data includes a software routine run by the processor.

In some embodiments, the operational data includes one or more operation parameters of the surveillance unit. In some embodiments, the one or more operation parameters include at least one operation parameter of the camera. In some embodiments, the one or more operation parameters include at least one parameter which governs the level of indications required from the at least one detector to define an alarm state in which images from the camera are permanently stored.

In some embodiments the surveillance unit includes a communication link for transmitting at least some of the images captured by the camera. Optionally, the communication link includes a wireless link or a wire link. In some embodiments, the control circuitry stores a log of events on the memory card.

There is further provided in accordance with an embodiment of the present invention, a surveillance unit according to any of the preceding claims, including an internal image memory for storing images captured by the camera. In some embodiments, at least some of the captured images are stored on the internal image memory and are automatically downloaded to the memory card responsive to insertion of the memory card to the slot.

There is further provided in accordance with an embodiment of the present invention, a method of controlling the operation of a surveillance unit, including storing operational data of the surveillance unit on a removable memory card and inserting the memory card into a predefined slot of the surveillance unit.

In some embodiments, storing the operational data includes inserting the removable memory card into a reader coupled to a computer and writing the operational data on the memory card by the computer. In some embodiments the method includes receiving the operational data by the computer over a communication link. In some embodiments, storing the operational data includes using a graphical software running on the computer to adjust the operational data. In some embodiments, the operational data includes a software which runs on a processor of the surveillance unit. In some embodiments, the operational data includes one or more operational parameters of the surveillance unit.

In some embodiments the method includes storing images captured by a camera of the surveillance unit on the memory card inserted to the surveillance unit.

### BRIEF DESCRIPTION OF FIGURES

The invention will be more clearly understood by reference to the following description of embodiments thereof in conjunction with the figures, in which:
Fig. 1 is a schematic illustration of a surveillance system, in accordance with an embodiment of the present invention; and
Fig. 2 is a schematic block diagram of a surveillance unit, in accordance with an embodiment of the present invention.

### DETAILED DESCRIPTION OF EMBODIMENTS

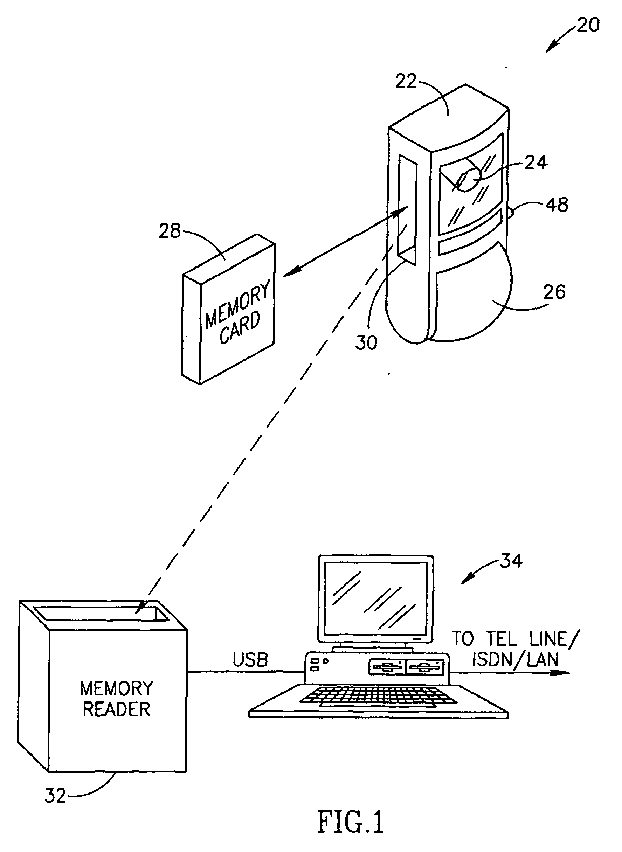

Fig. 1 is a schematic illustration of a surveillance system 20, in accordance with an embodiment of the present invention. Surveillance system 20 comprises a surveillance unit 22 which includes a video camera 24 and a detector 26 which actuates image capture by the camera. Alternatively, video camera 24 continuously captures video or still images, and indications from detector 26 are used to determine whether to store the captured images and/or whether to overwrite previously acquired images which were temporarily stored.

Camera 24 comprises an electronic video camera, such as a CCD or CMOS camera, or any other camera which provides an electrical output signal, either digital or analog. In some embodiments of the invention, the image signals provided by camera 24 may be either black and white or color.

In an embodiment of the invention, the images acquired by camera 24 are stored on a memory card 28 which is located during normal operation in a slot 30 of surveillance unit 22. In an embodiment of the invention, the images are continuously stored in memory card 28, overwriting previously stored images. When a suitable signal from detector 26 is received, a predetermined number of images from before and after the signal from detector 26 was received are protected from overwriting.

Memory card 28 comprises any type of memory which is useful for storing images. Memory card 28 may comprise a non-volatile memory or a volatile memory with backup power supply. In one embodiment of the invention, memory card 28 comprises a flash memory. Memory card 28 may be of substantially any memory size. Exemplary sizes include sizes between 4 and 32 Mbytes of storage space. Alternatively or additionally, memory card 28 comprises a disk memory, optionally a miniature disk memory.

In some embodiments, the images are stored on memory card 28 in a compressed digital form. In some embodiments of the invention, when it is desired to view the stored images taken by camera 24, memory card 28 is removed from surveillance unit 22 and is inserted into a memory card reader 32. Reader 32 is optionally coupled to a general purpose computer 34 using a wire or wireless link. Alternatively, reader 32 is an integral part of a general purpose or dedicated computer. In some embodiments, reader 32 comprises a converter to an interface of computer 34, such as an RS-485 to USB converter. The images can be displayed, processed, stored, transmitted and/or printed by computer 34 using methods known in the art.

In some embodiments of the present invention, memory card 28 stores a log of events such as power losses, noises and/or indications from detector 26. When memory card 28 is inserted to reader 32, the log may be viewed by a user of computer 34.

In an embodiment of the invention, memory card 28 stores, in addition to the images captured by camera 24, settings of the operation of surveillance unit 22. When memory card 28 is inserted to reader 32, a user may set the settings on memory card 28 through computer 34. In an embodiment of the invention, computer 34 runs a user-friendly interface program, optionally a graphic program, which is used to change the operation settings of surveillance unit 22. The user friendly interface program optionally uses a large screen (e.g., 14" or larger). In some embodiments, the graphic program used to change the settings is used to change settings of surveillance units connected to computer 34 through a communication link (wire or wireless), in addition to changing the settings on memory card 28. Optionally, the operation of the graphic program is the same for changing settings of surveillance units connected through the communication link and for changing settings through memory card 28.

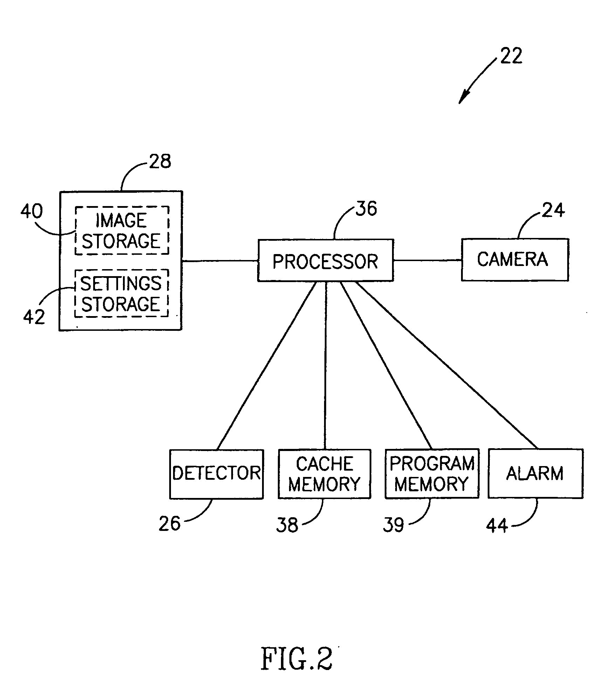

Fig. 2 is a schematic block diagram of surveillance unit 22, in accordance with an embodiment of the present invention. In some embodiments, surveillance unit 22 comprises a processor 36 which controls the operation of the surveillance unit. In an exemplary embodiment, processor 36 runs a software routine which receives indications from detector 26 and checks the settings in a settings storage area 42 of memory card 28. Optionally, the software run by processor 36 is stored within surveillance unit 22 on a program memory 39. Memory 39 comprises, for example, a non-volatile memory, such as a ROM, an EPROM or an EEPROM. Alternatively, program memory 39 comprises a volatile memory, optionally with a backup battery.

According to the detector indications and the settings, processor 36 determines when to actuate camera 24 and/or when to store images captured by camera 24. Images captured by camera 24 are passed, in some embodiments, to processor 36 which compresses the images and stores them in an image storage area 40 of memory card 28. Alternatively or additionally, processor 36 uses the detector indications and the settings to determine whether to operate an alarm 44. Alarm 44 may comprise a sound maker, lights and/or an alarm signal sent over a wire or wireless link to a security post.

In an embodiment of the invention, the settings stored in settings storage area 42 include the image quality captured by camera 24, the compression method and/or compression extent applied by processor 36 and/or the image format stored in memory card 28. Alternatively or additionally, the settings stored in settings storage area 42 include indication of whether camera 24 operates as a still or continuous camera, the rate of capture of continuous images and/or the number or duration of images taken responsive to a single detection signal of detector 26. Further alternatively or additionally, the settings include operation times of surveillance unit 22, times at which removal of memory card 28 is allowed, and/or an operation code of unit 22. Further alternatively or additionally, the settings in area 42 include settings of detector 26, such as, the sensitivity of detector 26 and/or the scanning pattern of the detector. Settings storage area 42 may include substantially any other operational parameters of camera 24, detector 26 and/or other units of surveillance unit 22. In an exemplary embodiment, the settings include different settings for different zones of the surveyed area. For example, some zones may be defined as warranting an urgent alarm together with image capture when a movement is detected, others may warrant only image capture and in still other zones movements may be ignored.

In some embodiments of the invention, surveillance unit 22 receives indications from a plurality of detectors each of which may be included in surveillance unit 22 or may be an external detector which connects to surveillance unit 22 through an inlet 48 (Fig. 1). In some embodiments, processor 36 receives the indications from the different detectors and determines whether to initiate image capture by camera 24 according to a weighted function of the received indications, using any method known in the art. In an embodiment of the present invention, the settings in area 42 include adjustments of the weighted function of the received indications.

In an embodiment of the present invention, detector 26 comprises an infrared detector, a microwave detector, an ultrasonic detector and/or a sound detector. Alternatively or additionally to using a detector 26 separate from camera 24, camera 24 continuously receives images which are not necessarily stored (or are stored temporarily) and video motion detection (VMD) is performed on the images to determine whether the images should be stored (permanently).

Alternatively to processor 36 constantly accessing the settings in memory card 28, the settings are automatically downloaded to a cache memory 38 having a faster access time, when memory card 28 is inserted into slot 30. In an embodiment of the present invention, cache memory 38 comprises a small memory chip such as a RAM or EEPROM. Alternatively or additionally, cache memory 38 is included within processor 36 or within program memory 39. The use of cache memory 38 allows faster operation of processor 36 and allows partial operation of surveillance unit 22 even when memory card 28 is removed from the surveillance unit.

In an embodiment of the invention, surveillance unit 22 comprises a non-removable internal memory (not shown) which stores images captured by camera 24. When memory card 28 is inserted into slot 30, the images are automatically (or responsive to a user command) uploaded from the internal memory to memory card 28. In an embodiment of the invention, when memory card 28 is within slot 30 the images are stored directly into memory card 28, instead of or in addition to their storage in the internal memory, while when memory card 28 is not within slot 30 the images are stored in the internal memory.

In some embodiments of the invention, the software run by processor 36 is stored in memory card 28, instead of in memory 39. Alternatively, memory 39 comprises a writeable memory (e.g., an EEPROM), and a copy of the software run by processor 36 is stored both in memory card 28 and in memory 39. Each time memory card 28 is inserted to slot 30, the software is downloaded from memory card 28 to memory 39 where the software is accessed by processor 36. Alternatively, the software is downloaded to memory 39 only when the software in memory card 28 is of a more recent version. Further alternatively, the software is not permanently stored on memory card 28 so as not to use up large memory areas which could be used to store images. Instead, when it is desired to pass an update in the software to memory 39, the software, or specific routines of the software, is stored in memory card 28 with an indication which will cause processor 36 to download the software (or the specific routines) to memory 39, upon insertion of the memory card into slot 30.

In some embodiments of the invention, the software updates are generated by a manufacturer of surveillance system 20 and are provided to the owner of the system. For example, the updates may be passed over a communication link, such as the Internet, to computer 34. The next time memory card 28 is inserted to reader 32 the user is optionally notified by computer 34 that a software update has been received by computer 34 and asked if the software update should be written to memory card 28.

Alternatively or additionally, the software updates are generated by the owner of surveillance system 20. In an embodiment of the invention, instead of using settings area 42 to change operation parameters of surveillance unit 22, the changes in the parameters are embedded into the software by the GUI run on computer 34.

In some embodiments of the invention, processor 36 analyzes the images to determine whether they are worth saving in storage area 40. In an embodiment of the present invention, processor 36 evaluates the clarity of each image and/or the ability to identify a person in the image and accordingly determines whether to store the image and/or whether to operate alarm 44. In some embodiments of the invention, the settings in area 42 include one or more images of people who are allowed to be in a zone surveyed by surveillance unit 22 and/or images of people that are not allowed to be in the surveyed zone. Alternatively or additionally, the settings in area 42 include parameters (e.g., shapes, sizes, colors), identifying humans or animals. In some embodiments of the invention, processor 36 compares shapes, colors, sizes and/or other parameters of moving images and/or other suspected image parts in images captured by camera 24 to the parameters of the images stored in settings area 42 (or to the stored parameters) and accordingly determines whether to store the captured images and/or whether to operate alarm 44.

In an embodiment of the invention, memory card 28 is locked within slot 30 and/or any other tamper prevention mechanism is used so as to prevent easy removal of the memory card from surveillance unit 22. Alternatively or additionally, slot 30 is hidden from viewers such that most intruders will not know that surveillance unit 22 comprises a removable memory card 28. Further alternatively or additionally, camera 24 is hidden from viewers and/or surveillance unit 22 is hidden from viewers, such that an intruder will not know that an image of him/her was acquired. Further alternatively or additionally, the removal and/or insertion of memory card 28 is allowed only at certain times and/or requires a time delay in which a warning on the removal is sent to the control station. In an embodiment of the invention, an alarm is operated when memory card 28 is removed without authorization.

In some embodiments of the invention, surveillance system 20 comprises a plurality of surveillance units 22 which comprise memory cards 28, and a single memory card reader 32 is used to view the images stored on the plurality of memory cards 28. In some embodiments, all the memory cards are programmed at a single central station. In an embodiment of the invention, all of memory cards 28 carry programming for all of surveillance units 22 and each surveillance unit 22 reads the settings of the particular unit. Thus, even when the settings of different locations are totally different no harm is caused when a different card 28 than was intended, is inserted into a surveillance unit 22. Alternatively or additionally, a warning sound or display is provided by surveillance unit 22 if the wrong memory card 28 is inserted thereto.

In some embodiments of the present invention, reader 32 receives only memory cards 28 which belong to the same surveillance system 20 as reader 32. Thus, in case a memory card 28 is removed from slot 30 by an intruder, the intruder will not be able to view the images in area 40 and/or alter the settings in area 42 without the specific reader 32 which is compatible (in hardware or software) to the specific memory card 28. Alternatively or additionally, reader 32 requires entering a code in order to view the images in area 40 and/or to alter the settings in area 42. The code is optionally entered through computer 34. Alternatively or additionally, the code is entered on a panel of reader 32.

In an embodiment of the invention, surveillance system 20 comprises a low bandwidth wireless link between surveillance unit 22 and a remote control station (not shown) at which a human operator is on duty. The use of a low bandwidth wireless link eliminates, on the one hand, the need of laying wires between surveillance unit 22 and the control station and, on the other hand, does not require expensive wireless transmission apparatus. In some embodiments, processor 36 generates representative (partial or low quality) thumbnail images from the captured images and the thumbnail images are passed on the wireless link to the remote control station for inspection. In an exemplary embodiment, when the human at the control station identifies images of interest, a message is sent to surveillance unit 22 instructing the unit to save these images. In some embodiments, all the captured images are stored temporarily in memory card 28 during a time period in which the human at the control station determines whether to permanently store the images.

In some embodiments of the present invention, processor 36 analyzes the images captured by camera 24 to determine whether their thumbnails should be transmitted to the control station. In an embodiment of the invention, each captured image is analyzed to determine whether it should be immediately stored, immediately discarded, sent in its entirety to the control station or sent as a thumbnail image to the control station. In an embodiment of the invention, the determination of whether to store, transmit or discard the image depends on user settings in storage area 42 and/or on the amount of free space in memory card 28.

Optionally, the settings in area 42 control the generation and transmission of the thumbnail images, for example the settings may determine the size of the thumbnail images and/or which images should be transmitted.

Alternatively or additionally to using a low bandwidth link to communicate with surveillance unit 22, a high bandwidth wireless communication link is used. In an embodiment of the present invention, infrared or ultrasound wireless transmission is used to communicate with the surveillance unit. When a user wishes to download images from surveillance unit 22 and/or upload software and/or settings to the surveillance unit, a portable computer, or dedicated image handler, with an infrared and/or wireless interface is brought to the vicinity of surveillance unit 22. Optionally, the images, software and/or settings are passed on the infrared or ultrasound link after a suitable password or other authorization is passed to surveillance unit 22.

In some embodiments of the invention, surveillance units 22 are also connected through wires to a control station. In an exemplary embodiment, the storage of images in memory card 28 is used as a backup in case the wire connection fails, for example due to intentional damage caused by an intruder.

Alternatively to using surveillance system 20 for detection of intruders, surveillance system 20 is used for other tasks, such as surveying areas in which accidents may occur. For example, surveillance system 20 may be used to monitor areas with many children, such as school buses and/or school yards, in which case the storage of captured images may be initiated by loud screams. Furthermore, surveillance system 20 may be used to monitor banks and/or other sensitive locations during and/or after work hours.

In an embodiment of the invention, surveillance unit 22 is mounted on a vehicle. In an exemplary embodiment, detector 26 comprises an acceleration detector, a velocity detector and/or any other movement detector which initiates the capture of images and/or permanent storage of images when the vehicle performs abrupt movements or stops. In an embodiment of the invention, camera 24 is actuated when the vehicle switches lanes and/or when the vehicle stops abruptly. The captured images may be used in court as proof of the actual facts of a traffic accident or of a claimed traffic law violation. In an embodiment of the invention, surveillance unit 22 comprises one or more controls which manually capture and/or prevent erasure of images.

Having settings storage area 42 and image storage area 40 within a single memory card 28 simplifies surveillance unit 22 and simplifies combined viewing of images and changing of settings by the user. It is noted, however, that in some embodiments of the invention, settings storage area 42 and image storage area 40 are located within different memory cards.

The number of parameters which may be changed in a surveillance unit 22 is enormous. By allowing the changing of the parameters by inserting a memory card, the parameters may be changed on a full scale computer with a suitable GUI, and there is no need to limit the number of parameters which may be changed by the user.

It will be appreciated that the above described methods may be varied in many ways, including, changing the order of steps, and the exact implementation used. It should also be appreciated that the above described description of methods and apparatus are to be interpreted as including apparatus for carrying out the methods and methods of using the apparatus.

The present invention has been described using non-limiting detailed descriptions of embodiments thereof that are provided by way of example and are not intended to limit the scope of the invention. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art. Furthermore, the terms "comprise," "include," "have" and their conjugates, shall mean, when used in the claims, "including but not necessarily limited to." The scope of the invention is limited only by the following claims:

## Claims

1. A surveillance unit, comprising:
a video camera which provides images in the form of electrical signals;
control circuitry which determines when to store images captured by the camera; and
a slot for operationally receiving a memory card on which the images are stored as determined by the control circuitry.

2. A surveillance unit according to claim 1, comprising at least one detector which provides signals to the control circuitry.

3. A surveillance unit according to claim 2, wherein the at least one detector comprises an infrared detector.

4. A surveillance unit according to any of claims 1-3, wherein the control circuitry determines when the digital camera should capture images.

5. A surveillance unit according to any of claims 1-4, wherein the control circuitry performs the determination responsive to video motion detection (VMD) performed on images captured by the camera.

6. A surveillance unit according to any of the preceding claims, wherein the control circuitry comprises a processor which receives the signals from the at least one detector and determines whether to store the captured images.

7. A surveillance unit according to claim 6, wherein the memory card comprises a storage area for operational data of the surveillance unit.

8. A surveillance unit according to claim 7, wherein the operational data is downloaded from the removable memory card to an internal memory of the surveillance unit when the memory card is inserted to the surveillance unit.

9. A surveillance unit according to claim 7 or claim 8, wherein the operational data comprises a software routine run by the processor.

10. A surveillance unit according to any of claims 7-9, wherein the operational data comprises one or more operation parameters of the surveillance unit.

11. A surveillance unit according to claim 10, wherein the one or more operation parameters comprise at least one operation parameter of the camera.

12. A surveillance unit according to claim 10 or claim 11, wherein the one or more operation parameters comprise at least one parameter which governs the level of indications required from the at least one detector to define an alarm state in which images from the camera are permanently stored.

13. A surveillance unit according to any of the preceding claims, comprising a communication link for transmitting at least some of the images captured by the camera.

14. A surveillance unit according to claim 13, wherein the communication link comprises a wireless link.

15. A surveillance unit according to claim 13, wherein the communication link comprises a wire link.

16. A surveillance unit according to any of the preceding claims, wherein the control circuitry stores a log of events on the memory card.

17. A surveillance unit according to any of the preceding claims, comprising an internal image memory for storing images captured by the camera.

18. A surveillance unit according to claim 17, wherein at least some of the captured images are stored on the internal image memory and are automatically downloaded to the memory card responsive to insertion of the memory card to the slot.

19. A method of controlling the operation of a surveillance unit, comprising:
storing operational data of the surveillance unit on a removable memory card; and
inserting the memory card into a predefined slot of the surveillance unit.

20. A method according to claim 19, wherein storing the operational data comprises inserting the removable memory card into a reader coupled to a computer and writing the operational data on the memory card by the computer.

21. A method according to claim 20, comprising receiving the operational data by the computer over a communication link.

22. A method according to claim 20, wherein storing the operational data comprises using a graphical software running on the computer to adjust the operational data.

23. A method according to any of claims 19-22, wherein the operational data comprises a software which runs on a processor of the surveillance unit.

24. A method according to any of claims 19-23, wherein the operational data comprises one or more operational parameters of the surveillance unit.

25. A method according to any of claims 19-24, comprising storing images captured by a camera of the surveillance unit on the memory card inserted to the surveillance unit.

## Patentansprüche

1. Überwachungseinheit, umfassend:
eine Videokamera, die Bilder in der Form von elektrischen Signalen liefert;
eine Steuerschaltungsanordnung, die bestimmt, wenn durch die Kamera eingefangene Bilder zu speichern sind; und
einen Schlitz zur betriebsbereiten Aufnahme einer Speicherkarte, auf der die Bilder gespeichert werden, wie durch die Steuerschaltungsanordnung bestimmt.

2. Überwachungseinheit nach Anspruch 1, umfassend mindestens einen Detektor, der Signale an die Steuerschaltungsanordnung abgibt.

3. Überwachungseinheit nach Anspruch 2, bei der der mindestens eine Detektor einen Infrarotdetektor umfasst.

4. Überwachungseinheit nach einem der Ansprüche 1-3, bei der die Steuerschaltungsanordnung bestimmt, wenn die Digitalkamera Bilder einfangen sollte.

5. Überwachungseinheit nach einem der Ansprüche 1-4, bei der die Steuerschaltungsanordnung die Bestimmung ansprechend auf eine Video-Bewegungsdetektion (VMD) ausführt, die bei durch die Kamera eingefangenen Bildern ausgeführt wird.

6. Überwachungseinheit nach einem der vorangehenden Ansprüche, bei der die Steuerschaltungsanordnung einen Prozessor umfasst, der die Signale von dem mindestens einen Detektor empfängt und bestimmt, ob die eingefangenen Bilder zu speichern sind.

7. Überwachungseinheit nach Anspruch 6, bei der die Speicherkarte einen Speicherbereich für Betriebsdaten der Überwachungseinheit umfasst.

8. Überwachungseinheit nach Anspruch 7, bei der die Betriebsdaten von der entfernbaren Speicherkarte zu einem internen Speicher der Überwachungseinheit heruntergeladen werden, wenn die Speicherkarte in der Überwachungseinheit eingesteckt ist.

9. Überwachungseinheit nach Anspruch 7 oder Anspruch 8, bei der die Betriebsdaten eine Softwareroutine umfassen, die durch den Prozessor ausgeführt wird.

10. Überwachungseinheit nach einem der Ansprüche 7-9, bei der die Betriebsdaten einen oder mehrere Betriebsparameter der Überwachungseinheit umfassen.

11. Überwachungseinheit nach Anspruch 10, bei der der eine oder die mehreren Betriebsparameter mindestens einen Betriebsparameter der Kamera umfassen.

12. Überwachungseinheit nach Anspruch 10 oder Anspruch 11, bei der der eine oder die mehreren Betriebsparameter mindestens einen Parameter umfassen, der den Anzeigenpegel bestimmt, der von dem mindestens einen Detektor benötigt wird, um einen Alarmzustand zu definieren, bei welchem Bilder von der Kamera permanent gespeichert werden.

13. Überwachungseinheit nach einem der vorangehenden Ansprüche, umfassend eine Datenübertragungsverbindung zur Übertragung von mindestens einigen von den durch die Kamera eingefangenen Bildern.

14. Überwachungseinheit nach Anspruch 13, bei der die Datenübertragungsverbindung eine drahtlose Verbindung umfasst.

15. Überwachungseinheit nach Anspruch 13, bei der die Datenübertragungsverbindung eine Drahtverbindung umfasst.

16. Überwachungseinheit nach einem der vorangehenden Ansprüche, bei der die Steuerschaltungsanordnung ein Ereignisprotokoll auf der Speicherkarce speichert.

17. Überwachungseinheit nach einem der vorangehenden Ansprüche, umfassend einen internen Bildspeicher zum Speichern von durch die Kamera eingefangenen Bildern.

18. Überwachungseinheit nach Anspruch 17, bei der mindestens einige von den eingefangenen Bildern auf dem internen Bildspeicher gespeichert werden und automatisch zur Speicherkarte heruntergeladen werden, ansprechend auf ein Einstecken der Speicherkarte in den Schlitz.

19. Verfahren zum Steuern des Betriebs einer Überwachungseinheit, umfassend:
Speichern von Betriebsdaten der Überwachungseinheit auf einer entfernbaren Speicherkarte; und
Einstecken der Speicherkarte in einen vordefinierten Schlitz der Überwachungseinheit.

20. Verfahren nach Anspruch 19, bei dem ein Speichern der Betriebsdaten umfasst: Einstecken der entfernbaren Speicherkarte in ein Lesegerät, das mit einem Computer gekoppelt ist, und Schreiben der Betriebsdaten auf die Speicherkarte durch den Computer.

21. verfahren nach Anspruch 20, umfassend: Empfangen der Betriebsdaten durch den Computer über eine Datenübertragungsverbindung.

22. Verfahren nach Anspruch 20, bei dem ein Speichern der Betriebsdaten umfasst: Verwenden einer Grafiksoftware, die auf dem Computer läuft, um die Betriebsdaten einzustellen.

23. Verfahren nach einem der Ansprüche 19-22, bei dem die Betriebsdaten eine Software umfassen, die auf einem Prozessor der Überwachungseinheit lauft.

24. Verfahren nach einem der Ansprüche 19-23, bei dem die Betriebsdaten einen oder mehrere Betriebsparameter der Überwachungseinheit umfassen.

25. Verfahren nach einem der Ansprüche 19-24, umfassend: Speichern von durch eine Kamera der Überwachungseinheit eingefangenen Bildern auf der in die Überwachungseinheit eingesteckten Speicherkarte.

## Revendications

1. Unité de surveillance, comportant :
une caméra vidéo qui délivre des images sous la forme de signaux électriques,
un circuit de commande qui détermine quand mémoriser des images capturées par la caméra, et
une fente pour recevoir en fonctionnement une carte mémoire sur laquelle les images sont mémorisées comme déterminé par le circuit de commande.

2. Unité de surveillance selon la revendication 1, comportant au moins un détecteur qui délivre des signaux au circuit de commande.

3. Unité de surveillance selon la revendication 2, dans laquelle le au moins un détecteur comporte un détecteur infrarouge.

4. Unité de surveillance selon l'une quelconque des revendications 1 à 3, dans laquelle le circuit de commande détermine quand la caméra numérique doit capturer des images.

5. Unité de surveillance selon l'une quelconque des revendications 1 à 4, dans laquelle le circuit de commande effectue la détermination en réponse à une détection de mouvement vidéo (VMD) effectuée sur des images capturées par la caméra.

6. Unité de surveillance selon l'une quelconque des revendications précédentes, dans laquelle le circuit de commande comporte un processeur qui reçoit les signaux en provenance du au moins un détecteur et détermine s'il faut mémoriser les images capturées.

7. Unité de surveillance selon la revendication 6, dans laquelle la carte mémoire comporte une zone de mémorisation destinée à des données opérationnelles de l'unité de surveillance.

8. Unité de surveillance selon la revendication 7, dans laquelle les données opérationnelles sont téléchargées de la carte mémoire extractible vers une mémoire interne de l'unité de surveillance lorsque la carte mémoire est insérée dans l'unité de surveillance.

9. Unité de surveillance selon la revendication 7 ou la revendication 8, dans laquelle les données opérationnelles comportent une routine logicielle exécutée par le processeur.

10. Unité de surveillance selon l'une quelconque des revendications 7 à 9, dans laquelle les données opérationnelles comportent un ou plusieurs paramètres de fonctionnement de l'unité de surveillance.

11. Unité de surveillance selon la revendication 10, dans laquelle le ou les paramètres de fonctionnement comportent au moins un paramètre de fonctionnement de la caméra.

12. Unité de surveillance selon la revendication 10 ou la revendication 11, dans laquelle le ou les paramètres de fonctionnement comportent au moins un paramètre qui régit le niveau d'indications requis par le au moins un détecteur pour définir un état d'alarme dans lequel des images en provenance de la caméra sont mémorisées de manière permanente.

13. Unité de surveillance selon l'une quelconque des revendications précédentes, comportant une liaison de communications pour transmettre au moins certaines des images capturées par la caméra.

14. Unité de surveillance selon la revendication 13, dans laquelle la liaison de communications comporte une liaison sans fil.

15. Unité de surveillance selon la revendication 13, dans laquelle la liaison de communications comporte une liaison filaire.

16. Unité de surveillance selon l'une quelconque des revendications précédentes, dans laquelle le circuit de commande mémorise un journal d'événements sur la carte mémoire.

17. Unité de surveillance selon l'une quelconque des revendications précédentes, comportant une mémoire d'images interne pour mémoriser des images capturées par la caméra.

18. Unité de surveillance selon la revendication 17, dans laquelle au moins certaines des images capturées sont mémorisées sur la mémoire d'images interne et sont automatiquement téléchargées dans la carte mémoire en réponse à l'insertion de la carte mémoire dans la fente.

19. Procédé de commande du fonctionnement d'une unité de surveillance, comportant les étapes consistant à :
mémoriser des données opérationnelles de l'unité de surveillance sur une carte mémoire extractible, et
insérer la carte mémoire dans une fente prédéterminée de l'unité de surveillance.

20. Procédé selon la revendication 19, dans lequel la mémorisation des données opérationnelles comporte l'insertion de la carte mémoire extractible dans un lecture couplé à un ordinateur et l'écriture par l'ordinateur des données opérationnelles sur la carte mémoire.

21. Procédé selon la revendication 20, comportant la réception des données opérationnelles par l'ordinateur sur une liaison de communications.

22. Procédé selon la revendication 20, dans lequel la mémorisation des données opérationnelles comporte l'utilisation d'un logiciel graphique s'exécutant sur l'ordinateur afin d'ajuster les données opérationnelles.

23. Procédé selon l'une quelconque des revendications 19 à 22, dans lequel les données opérationnelles comportent un logiciel qui s'exécute sur un processeur de l'unité de surveillance.

24. Procédé selon l'une quelconque des revendications 19 à 23, dans lequel les données opérationnelles comportent un ou plusieurs paramètres de fonctionnement de l'unité de surveillance.

25. Procédé selon l'une quelconque des revendications 19 à 24, comportant la mémorisation d'images capturées par une caméra de l'unité de surveillance sur la carte mémoire insérée dans l'unité de surveillance.
